Europäisches Patentamt

European Patent Office

Office européen des brevets

(11) Veröffentlichungsnummer : **0 152 645**
**B1**

# (12) EUROPÄISCHE PATENTSCHRIFT

(45) Veröffentlichungstag der Patentschrift :
29.07.87

(21) Anmeldenummer : 84201791.5

(22) Anmeldetag : 04.12.84

(51) Int. Cl.⁴ : **B 25 D 17/08**, B 23 B 31/12

(54) Umschaltvorrichtung eines Bohrhammers für Dreh- oder Hammerbohren mit Bohrfuttersicherung.

(30) Priorität : 14.02.84 DE 3405102

(43) Veröffentlichungstag der Anmeldung :
28.08.85 Patentblatt 85/35

(45) Bekanntmachung des Hinweises auf die Patenterteilung : 29.07.87 Patentblatt 87/31

(84) Benannte Vertragsstaaten :
CH FR GB IT LI NL

(56) Entgegenhaltungen :
US-A- 4 416 338

(73) Patentinhaber : Licentia Patent-Verwaltungs-GmbH
Theodor-Stern-Kai 1
D-6000 Frankfurt/Main 70 (DE)

(72) Erfinder : Taschke, Franz, Dipl.-Ing.
Wildgangsweg 4
D-7000 Stuttgart 50 (DE)
Erfinder : Geis, Wilhelm, Dipl.-Ing. (FH)
Mühlefeldstrasse 8
D-7057 Leutenbach (DE)
Erfinder : Hoyer, Rudolf, Ing. grad.
Im Kugelhof 34
D-7154 Althütte (DE)

(74) Vertreter : Wolf, Otto, Dr. Ing. et al
Licentia Patent-Verwaltungs-GmbH Theodor-Stern-Kai 1
D-6000 Frankfurt 70 (DE)

## Beschreibung

Die Erfindung bezieht sich auf eine Umschaltvorrichtung eines elektropneumatischen Bohrhammers von Drehbohren auf Hammerbohren und umgekehrt, bestehend aus einer die das Werkzeug aufnehmende Bohrspindelhülse konzentrisch umschließende, mittels einer Rasteinrichtung in verschiedenen Drehlagen festlegbaren und mit einem Stellring drehfest verbundenen Stellhülse, welche in Durchbrechungen der Bohrpindehülse untergebrachte sowie in Aussparungen des Werkzeugschafts eingreifende Verriegelungselemente umschließt, über die das Werkzeug mitgenommen wird und die Ausnehmungen für das radiale Ausweichen der Verriegelungselemente in einer bestimmten Drehlage der Stellhülse aufweist, wobei der Stellhülse ein im abtriebsseitigen Endbereich der Bohrspindelhülse angebrachtes Bohrfutter räumlich vorgeordnet ist.

Bei einer Vorrichtung dieser bekannten Art ist es nicht auszuschließen, daß ein in die Bohreraufnahme eingesetzter und durch die entsprechende Drehlage der Stellhülse verriegelter Hammerbohrer zusätzlich auch noch mittels des Bohrfutters gespannt wird. In einem solchen Fall wäre eine freie Axialbewegung des Hammerbohrers und damit dessen Schlag- oder Hammerfunktion unterbunden, außerdem wären Beschädigungen des Hammerbohrers unvermeidlich.

Es ist Aufgabe der Erfindung, einen Weg zu finden, der ausschließt, daß ein Hammerbohrer zugleich auch mit Hilfe des Bohrfutters gespannt wird.

Diese Aufgabe ist erfindungsgemäß dadurch gelöst, daß der Stellring mit einer Ausnehmung versehen ist, welche lediglich in der die Verriegelungselemente freigebenden Drehlage der Stellhülse die im Bohrfutterkörper befindliche Bohrung für die Aufnahme des Führungszapfens des Bohrfutterschlüssels freigibt.

Ein Ausführungsbeispiel der Erfindung gemäß Ansprüchen 1 bis 4 wird im nachstehenden anhand der Zeichnung erläutert.

Es zeigen :

Figur 1   einen Längsschnitt durch das Getriebegehäuse einschließlich der Spindelhülse eines Bohrhammers,

Figur 2   einen Längsschnitt durch das Bohrfutter,

Figur 3   eine Seitenansicht des getriebeseitigen Teils eines Bohrhammers einschließlich Stellhülse und Bohrfutter.

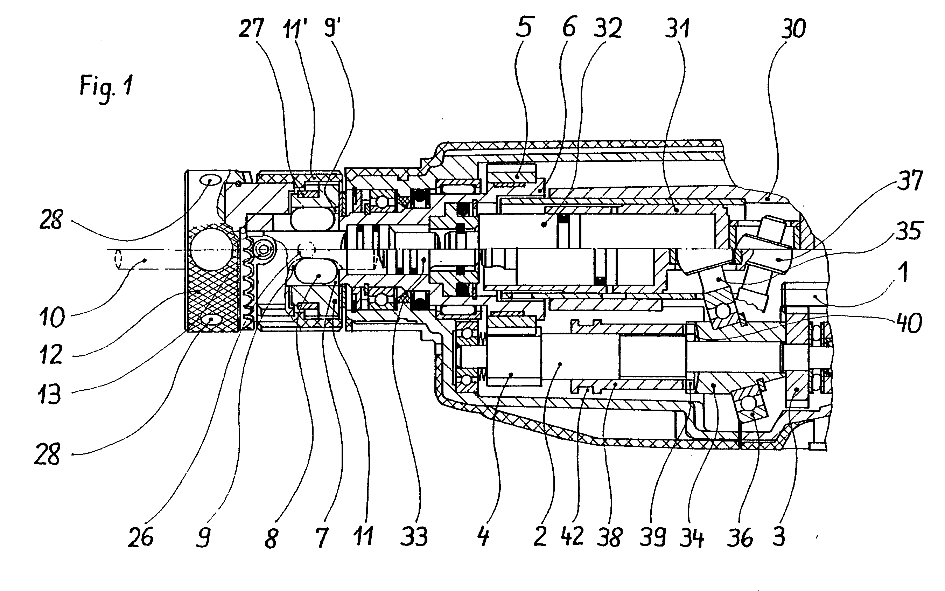

Wie aus Fig. 1 ersichtlich ist, steht das Ritzel 1 der Ankerwelle des nicht dargestellten Antriebsmotors mit einem auf der Vorgelegewelle 2 angebrachten Zahnrad 3 im Eingriff. In ihrem abtriebsseitig liegenden Bereich trägt die Vorgelegewelle ein weiteres Zahnrad 4, das mit dem Zahnrad 5 der Bohrspindelhülse 6 kämmt.

Die Bohrspindelhülse 6 enthält Ausnehmungen 7 in Form von Durchbrechungen für je ein Verriegelungselement 8. Den Verriegelungselementen 8 sind geeignet bemessene Aussparungen 9 im Schaft des in der unteren Hälfte der Fig. 1 gestrichelt angedeuteten Werkzeugs 10 zugeordnet, desgleichen passende Ausnehmungen 9' in der Stellhülse 11, welche die Bohrspindelhülse 6 konzentrisch umgibt.

Die Mitnahme des Werkzeugs 10 durch die rotierende Bohrspindelhülse 6 erfolgt über die Verriegelungselemente 8, die anstelle von Walzen auch als Kugeln, Keile oder dergl. ausgebildet sein können. Zu diesem Zweck ist die Stellhülse 11 in eine solche Lage zu bringen, daß ihre Ausnehmungen 9' seitlich neben den Verriegelungselementen 8 liegen, so daß diese radial nicht ausweichen können und von der Innenwandung der Stellhülse in die Aussparungen 9 im Werkzeugschaft gepreßt werden. Damit ist die Kraftübertragung Bohrspindelhülse — Verriegelungselemente — Werkzeug hergestellt.

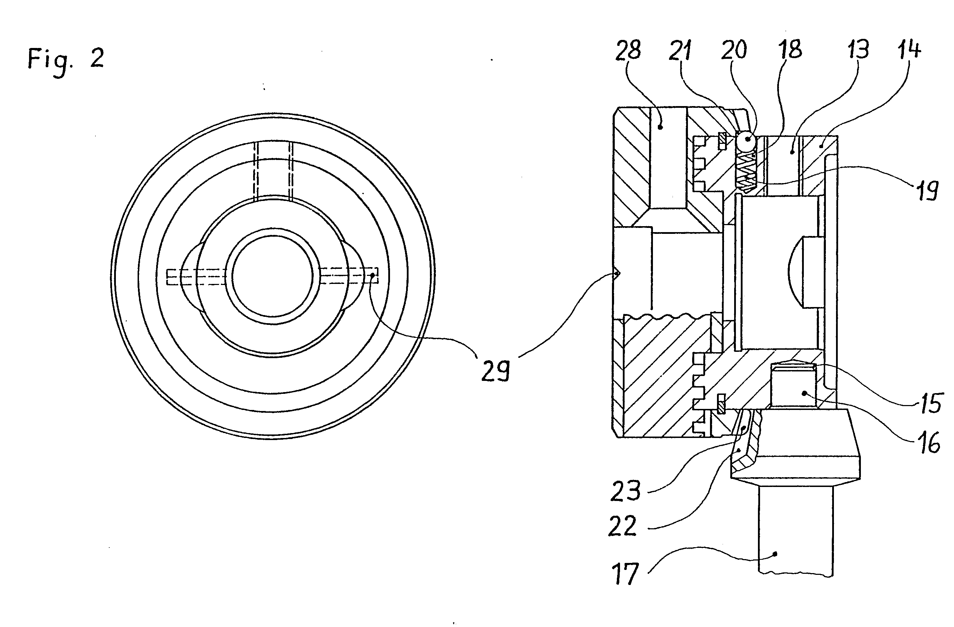

Auf der Bohrspindelhülse 6 ist ein als Dreibackenfutter ausgebildetes Bohrfutter 12 befestigt, das der Stellhülse 11 räumlich unmittelbar vorgeordnet, und, wie aus Fig. 2 ersichtlich ist, mittels einer in die Gewindebohrung 13 im Bohrfutterkörper 14 eingebrachten Wurmschraube oder dergleichen auf dem abtriebsseitigen Endbereich der Bohrspindelhülse befestigt ist.

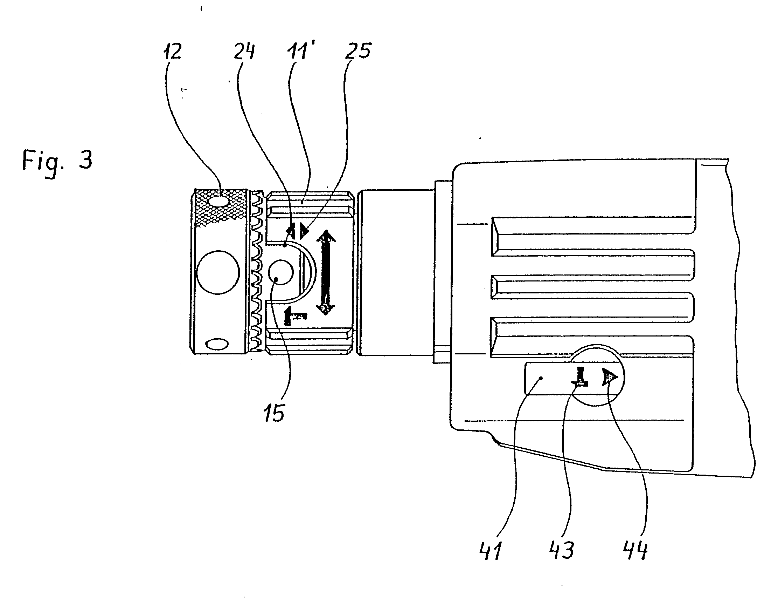

Wie Fig. 2 des weiteren zeigt, weist der Bohrfutterkörper 14 eine radial verlaufende Sackbohrung 15 auf, in welche der Führungszapfen 16 des Bohrfutterschlüssels 17 paßt. Der Bohrfutterkörper 14 enthält eine weitere Radialbohrung 18, in welche eine Feder 19 eingesetzt ist, die auf eine Kugel 20 einwirkt, welcher eine Ausnehmung 21 im Futterkörper 14 zugeordnet ist. Bei vollständig offenem Bohrfutter 12, wie es für Hammerbohrbetrieb erforderlich ist, rastet die Kugel 20 hörbar in die Ausnehmung 21 im Bohrfutterkörper 14 ein. Damit ist das Bohrfutter 12 in seiner maximalen Backenöffnungslage fixiert. Nach dem Einsetzen des Hammerbohrers in die als Aufnahme ausgebildete Bohrspindelhülse 6 und dessen Verriegelung mittels der Elemente 8 durch entsprechende Verdrehung der Stellhülse 11 wird somit Hammerbohrbetrieb ohne jegliche Beeinträchtigung ermöglicht. Der mit der Stellhülse 11 drehfest verbundene Stellring 11' besitzt, wie aus Fig. 3 ersichtlich ist, eine halbkreisförmig oder ähnlich gestaltete Ausnehmung 24.

Diese Ausnehmung 24 befindet sich in der die Verriegelung des Hammerbohrers bewirkenden Drehlage der Stellhülse 11 in einer solchen Position, daß die Sackbohrung 15 im Bohrfutterkörper 14 überdeckt ist, so daß der Bohrfutterschlüssel 17 zwecks Verstellung der Spannbacken nicht ansetzbar ist. Damit ist sichergestellt, daß der Hammerbohrer nicht noch zusätzlich mittels des Bohrfutters 12 eingespannt werden kann.

Zur Betätigung des Bohrfutters 12 ist es erforderlich, daß der Führungszapfen 16 des Bohrfutterschlüssels 17 in die Sackbohrung 15 eingeführt werden kann, so daß der Zahnkranz 22 mit dem Zahnkranz 23 des Bohrfutters in Eingriff kommt (Fig. 2). Liegt im Bedarfsfall für die Verwendung eines Metall- oder Holzbohrers mit zylindrischem Schaft vor, so wird zunächst die Stellhülse 11 durch eine entsprechende Drehung in die Entriegelungslage gebracht, welche durch die beiden in Axialrichtung spiegelbildlich zueinander liegenden Pfeilspitzen 25 definiert ist (Fig. 3).

Die Verriegelungselemente 8 können dann radial in die Ausnehmungen 9' in der Stellhülse 11 ausweichen, so daß der gegebenenfalls eingesetzte Hammerbohrer entfernt werden kann. In dieser Lage der Stellhülse 11 gibt die Ausnehmung 24 im Stellring 11' die Sackbohrung 15 frei, so daß der Führungszapfen 16 des Bohrfutterschlüssels in die Sackbohrung 15 einführbar und die Spannbacken des Bohrfutters 12 betätigbar sind. Der betreffende Bohrer 10 kann somit eingespannt und der Bohrhammer als reine Drehbohrmaschine benutzt werden. Zur Arretierung der Stellhülse 11 in der jeweiligen Funktionslage dient eine Kugel 26 (Fig. 1), die unter der Wirkung einer auf die Stellhülse einwirkenden Ringfeder 27 steht und mit entsprechenden Aussparungen in der Stellhülse einrastend zusammenwirkt. Das Bohrfutter 12 ist mit zwischen den Spannbacken angeordnet, radial verlaufenden Entstaubungsbohrungen 28 versehen, durch welche der beim Bohrvorgang anfallende Staub entweichen kann.

Um das Einsetzen von Hammerbohrern (Steinbohrern) in die Werkzeugaufnahme zu erleichtern, sind an der Frontseite des Bohrfutters 12 Markierungsnuten 29 (Fig. 2) vorgesehen. Diese Markierungsnuten definieren bei der Einrastlage befindlichem Bohrfutter 12 (maximale Öffnungslage) die Position der Aussparungen 9 im Bohrerschaft beim Einsetzen des Bohrers 10.

Der pneumatische Schlagmechanismus umfaßt einen im Gehäuseteil 30 zentrierten und axial verschiebbar geführten Arbeitskolben 31, der auf einen in seinem Innern untergebrachten, frei beweglichen Arbeitskolben 32 einwirkt und diesen pneumatisch in eine Hin- und Herbewegung versetzt, wobei der Arbeitskolben 32 beim Arbeitshub seine Bewegungsenergie auf den in der Bohrspindelhülse geführten Döpper 33 überträgt, der den Schaft des Hammerbohrers 10 beaufschlagt. Der Antriebskolben 31 wird beim Ausführungsbeispiel mittels eines Taumelantriebs in eine Hin- und Herbewegung versetzt. Der Taumelantrieb besteht dabei aus einem auf der Vorgelegewelle 2 befindlichen Taumelkörper 34, auf dem ein einen sich radial erstreckenden Stößel 35 enthaltender Ring 36 drehbar gelagert ist, so daß der Stößel eine Hin- und Herbewegung ausführt, welche über eine kugelförmige Erweiterung 37 des Stößels 35 auf den Arbeitskolben 31 übertragen wird.

Auf der Vorgelegewelle 2 ist eine Kupplungshülse 38 längsverschiebbar, jedoch unverdrehbar angeordnet, die mit Kupplungsklauen 39 versehen ist, welche durch Axialverschiebung der Kupplungshülse mit den Kupplungsklauen 40 des frei drehbar auf der Vorgelegewelle angeordneten Taumelkörpers 34 in bzw. außer Eingriff bringbar sind. Die Axialverschiebung der Kupplungshülse erfolgt mittels einer in Fig. 3 mit 41 bezeichneten Handhabe, die in eine Ringnut 42 der Kupplungshülse eingreift. Das pneumatische Schlagwerk kann somit im Bedarfsfall zu- oder abgeschaltet werden, vergleiche hierzu auch die entsprechenden Symbole 43 und 44 in Fig. 3.

**Patentansprüche**

1. Umschaltvorrichtung eines elektropneumatischen Bohrhammers von Drehbohren auf Hammerbohren und umgekehrt, bestehend aus einer die das Werkzeug (10) aufnehmende Bohrspindelhülse (6) konzentrisch umschließende, mittels einer Rasteinrichtung in verschiedenen Drehlagen festlegbaren und mit einem Stellring (11') drehfest verbundenen Stellhülse (11), welche in Durchbrechungen (7) der Bohrspindelhülse (6) untergebrachte sowie in Aussparungen (9) des Werkzeugschafts eingreifende Verriegelungselemente (8) umschließt, über die das Werkzeug (10) mitgenommen wird und die Ausnehmungen (9') für das radiale Ausweichen der Verriegelungselemente (8) in einer bestimmten Drehlage der Stellhülse aufweist, wobei der Stellhülse (11) ein im abtriebsseitigen Endbereich der Bohrspindelhülse (6) angebrachtes Bohrfutter (12) räumlich vorgeordnet ist, dadurch gekennzeichnet, daß der Stellring (11') mit einer Ausnehmung (24) versehen ist, welche lediglich in der die Verriegelungselemente (8) freigebenden Drehlage der Stellhülse (11) die im Bohrfutterkörper (14) befindliche Bohrung (15) für die Aufnahme des Führungszapfens (16) des Bohrfutterschlüssels (17) freigibt.

2. Vorrichtung nach Anspruch 1, dadurch gekennzeichnet, daß in einer vorzugsweise radial verlaufenden Bohrung im Bohrfutterkörper (14) eine Feder (19) untergebracht ist, die auf eine Kugel (20) einwirkt, welche in der für die Verriegelung eines Hammerbohrers erforderlichen maximalen Öffnungslage des Bohrfutters (12) in eine Aussparung (21) im Bohrfutterkörper (14) einrastet.

3. Vorrichtung nach den Ansprüchen 1 und 2, dadurch gekennzeichnet, daß das Bohrfutter (12) als Dreibackenfutter ausgebildet ist.

4. Vorrichtung nach den Ansprüchen 1 bis 3, dadurch gekennzeichnet, daß das Bohrfutter (12) mit zwischen den Spannbacken angeordneten, radial verlaufenden Entstaubungsbohrungen (28) versehen ist.

**Claims**

1. Selector for an electropneumatic hammer drill for change-over from rotational drilling to percussive drilling and vice-versa, consisting of a setting sleeve (11) which concentrically encloses the drill spindle sleeve (6) receiving the tool (10), and which is fixable in various rotational positions by a detent mechanism, and which is connected to a setting ring (11') for rotation therewith, which setting sleeve encloses locking members (8) which are arranged in apertures (7) of the drill spindle sleeve (6), and which engage recesses (9) in the tool shaft, and via which the tool (10) is entrained, which setting sleeve comprises recesses (9') for radial deviation of the locking members (8) when the setting sleeve is in a certain rotational position, which setting sleeve (11) is spatially preceded by a drill chuck (12) arranged in the output end area of the drill spindle sleeve (6), characterized in that the setting ring (11') is provided with a recess (24) which only releases the bore (15) in the drill chuck member (14) for reception of the guide pin (16) of the drill chuck key (17) when the setting sleeve (11) is in the rotational position in which the locking members (8) are released.

2. Selector as defined in Claim 1, characterized in that there is arranged in a preferably radially extending bore in the drill chuck member (14) a spring (19) which acts upon a ball (20) which engages a recess (21) in the drill chuck member (14) when the drill chuck (12) is in the maximum opening position required to lock a hammer drill.

3. Selector as defined in Claims 1 and 2, characterized in that the drill chuck (12) is in the form of a three-jaw chuck.

4. Selector as defined in Claims 1 to 3, characterized in that the drill chuck (12) is provided with radially extending dust removal bores (28) arranged between the chuck jaws.

**Revendications**

1. Sélecteur de dispositif de forage électropneumatique à percussion ou rotation, composé d'une douille de réglage (11) venant entourer concentriquement la broche de perçage (6) entraînant l'outil (10), solidairement liée à une bague de réglage (11') et réglable sur diverses positions de rotation au moyen d'un dispositif à encastrement, douille qui , pour entraîner l'outil (10), renferme d'une part des éléments de verrouillage (8) passant au travers de découpures (7) pratiquées dans la broche de perçage (6) et d'évidements (9) de la queue d'outil et fait état, d'autre part, de creux (9') destinés à permettre un certain décalage radial des éléments de verrouillage (8) à une certaine position de la douille de réglage (11), celle-ci étant disposée dans l'espace, du côté de la zone de sortie de la broche de perçage (6), devant un mandrin de serrage (12), caractérisé par le fait que la bague de réglage (11') fait elle-même état d'un creux (24) qui n'a pour seul effet que de libérer, par une rotation appropriée de la douille de réglage (11) libérant elle-même les éléments de verrouillage (8), l'orifice (15) présent sur le corps (14) du mandrin de serrage, ceci dans le but de permettre de recevoir le tenon de guidage (16) de la clé de mandrin (17).

2. Dispositif selon la revendication 1, caractérisé par le fait qu'un ressort (19), placé dans un alésage de préférence radial par rapport au corps (14) du mandrin de serrage, agit sur une bille (20) qui, selon l'ouverture maximale du mandrin de serrage (12) requise pour le verrouillage du foret percutant, vient s'engager dans un évidement (21) du corps (14) du mandrin de serrage.

3. Dispositif selon les revendications 1 et 2, caractérisé par le fait que le mandrin de serrage (12) est construit selon la forme classique d'un mandrin à trois mors.

4. Dispositif selon les revendications 1 à 3, caractérisé par le fait que le mandrin de serrage (12) fait état d'orifices de dépoussiérage (28) disposés de façon radiale entre les mors de serrage.

Fig. 1

Fig. 2

28  21  20  18  13  14

19

29

15

16

23

22

17

0 152 645

Fig. 3

0 152 645